# EUROPEAN PATENT SPECIFICATION

(11) **EP 3 301 955 B1**
(45) Date of publication and mention of the grant of the patent: **27.05.2020**
(21) Application number: 17000737.1
(22) Date of filing: 28.04.2017
(51) Int. Cl.: H04W 84/18, H04L 29/08, H04W 4/021

(54) **SMART ELECTRONIC APPARATUS**
INTELLIGENTE ELEKTRONISCHE VORRICHTUNG
APPAREIL ÉLECTRONIQUE INTELLIGENT

(30) Priority: 30.09.2016 CN 201610867658
(43) Date of publication of application: 04.04.2018
(73) Proprietor: Xiamen Eco Lighting Co., Ltd., Xiamen, Fujian 361000 (CN)
(72) Inventor: LIU, Danqing, Fujian, 361000 (CN); FU, Chenzhen, Fujian, 361000 (CN); Zhang, Xiaocong, Fujian, 361000 (CN)
(74) Representative: Proi World Intellectual Property GmbH

(56) References cited:
- EP-A1- 3 005 318
- US-A1- 2014 074 907
- US-A1- 2016 063 847
- US-A1- 2016 091 871
- US-A1- 2016 167 486

## Description

### Technical Field

The present invention relates to a smart electronic apparatus, and more particularly relates to a portable smart electronic apparatus.

### Background

Various kinds of electronic apparatuses are developed along with technological developments to improve people's life. In these technologies, one of them is an electronic apparatus which can provide a mechanism for smartly determining the user's location. It is very important for designers of such technologies to know if a user appears in some particular regions or which users appear in some particular regions. For example, if it is detected that a user appears inside a house or in an office space, a control apparatus can be designed to turn on a suitable light and other electronic apparatuses. On the other hand, if a user is detected that he leaves a house, or leaves the office space, a corresponding control apparatus can be designed to turn off the light, or to activate a security system.

For designs in this filed, the battery capacity is always a bottleneck. An apparatus which needs frequent charging may reduce a user's willingness to use, or may cause inconvenience in operation. It would be very helpful if a portable electronic apparatus capable of determining a user's location and interacting with other devices can be developed.

By way of further background the following publications are referred to: EP 3 005 318 A1 (JAGUAR LAND ROVER LTD [GB]) discloses a vehicle-mounted base station determining the position of a Mobile Communication Unit (MCU, e.g. key fob) relative to the vehicle, based on the detected wireless signal, and causing the MCU to enter into power saving mode after predetermined period of "relative" immobility, therefore disclosing the user motion detected and compared with a predetermined motion rule.

### Summary of Invention

One embodiment of the present application provides a portable smart identifying apparatus. A user can carry the portable smart identifying apparatus to different regions and acts. A snap flip can be provided to this portable smart identifying apparatus, such that the portable smart identifying apparatus can be fastened to a key ring. Such portable smart identifying apparatus can be implemented in a mobile phone protecting shell, thereby a user can carry the portable smart identifying apparatus while carrying the mobile phone. The portable smart identifying apparatus can be provided to different kinds of daily necessaries, for example, a stuff that is convenient for a user to carry on, such as a wallet.

The portable smart identifying apparatus can comprise a circuit board on which a corresponding control chip, a detecting circuit and a corresponding communicating device, such as an antenna, are provided. Also, the portable smart identifying apparatus can comprise a lithium battery, a button cell battery, a normal battery or sharing a power source with other apparatuses. For example, such portable smart identifying apparatus can electrically connect to a battery of the mobile phone and acquire the power from the mobile phone battery.

The portable smart identifying apparatus 20 can be implemented in a vehicle such as a car, a motor cycle, a bicycle, or a skateboard. The vehicles often leave or enter a particular region along with the user. In this sense, the method for providing the smart identifying apparatus to a vehicle also belongs to a scope for a portable smart identifying apparatus that a user can carry. The portable smart identifying apparatus is convenient for a user to carry and operate in different regions.

In one embodiment, the smart identifying apparatus 20 comprises an motion detecting circuit, a communicating circuit and a processing circuit. The motion detecting circuit can be implemented by a triaxial accelerometer or a 9 axis accelerometer along with other circuits, or implemented by other detecting circuits. For example, the motion detecting circuit can be implemented by a vibration senor or corresponding circuits. Additionally, based on different design requirements, such as cost or sensitivity, other existing products that can detect motions can be used to implement the motion detecting circuit.

Besides, the motion detecting circuit can comprise a detecting device, or comprise a combination of a plurality of detecting devices. If the motion detecting circuit comprises a combination of a plurality of detecting devices, many motion detecting results can be combined to determine an motion of a user who carries this motion detecting circuit, to acquire a more accurate determining result. Besides, detecting devices with lower cost or lower power consumption can be used when cost is a major concern.

Additionally, the communicating circuit of the smart identifying apparatus has an effective wireless transmitting distance in connecting to the IOT gateway. The IOT gateway mentioned here means an IOT gateway for IOT application, which can be applied to control other IOT apparatuses to perform a predetermined operation. It is noted that, with continuously improving techniques and lower cost, today's IOT apparatuses can provide not only specific applications, such as light, music playing, or temperature adjusting, but also above-mentioned IOT gateway functions. In other words, an LED provided in a ceiling can comprise a circuit board with a corresponding communicating circuit, such that the desired IOT gateway function can be achieved. In another example, a necessary communicating circuit can be implemented in a television to provide the desired IOT gateway function. Or, in still another example, an independent machine is set up to provide the desired IOT gateway function.

The IOT gateway can follow one of various communicating protocols, for example, Z-Wave, Zigbee, or other published standards, or other communicating standards defined by some specific manufacturers. Such IOT gateway can be a single electronic apparatus, such as an air conditioner, and does not control other electronic equipment's.

Specifically, the effective wireless transmitting distance for the communicating circuit can indicate a current location of the user via setting the power and related parameters for the communicating circuit. The communicating circuit communicates with an IOT gateway via a wireless communication protocol in the effective wireless communication distance, such that the IOT gateway can determine if the communication circuit is in the effective wireless communication distance corresponding to the IOT gateway.

The IOT apparatus is informed to perform a corresponding operation based on a predetermined rule if the IOT gateway determines that the communication circuit is in the effective wireless communication distance corresponding to the IOT gateway. For example, if the effective wireless communication distance is 5m, it is suitable for a room design. If the user carries the smart identifying apparatus, enters a room having an IOT gateway, and the smart identifying apparatus successfully communicates with the IOT gateway, the IOT gateway can determine that the user appears in the 5m range and turns on corresponding IOT equipment, such as air conditioners or lights. To the contrary, if the smart identifying apparatus cannot successfully connect with the IOT gateway, the IOT gateway turns off the light, the air conditioner or related equipment according to a predetermined rule. Another scenario is that, when the smart identifying apparatus successfully connects to the IOT gateway, the IOT gateway can turn on, turn off or adjust IOT apparatuses, to match the requirements for different users in the same region. For example, if the user A and B appear in the same room concurrently, and the IOT gateway connects to two corresponding smart identifying apparatus, the IOT gateway can adjust the air conditioner to provide the environment suitable for two people, or playing corresponding music.

The processing circuit of the smart identifying apparatus compares the user motion detected by the motion detecting circuit with a predetermined motion rule, and decides if the communication circuit is controlled to actively generate a notice to attempt to communicate with the IOT gateway according to the comparing result. In other words, the motion detecting circuit detects if the user has a motion, or detects what the motion is. The motion results for the detected motions are transmitted to the processing circuit after processed or without processed. The processing circuit determines if the detected motion meets a predetermined motion mode according to a predetermined motion rule. If the detected motion meets a predetermined motion mode, the communicating circuit attempts to communicate with the IOT gateway. If the communication is successfully established, the IOT gateway determines the user probably appears in this region and corresponding operation is performed, to control a corresponding electronic equipment to perform a predetermined motion.

With this mechanism, the communicating circuit does not need to continuously communicate with the IOT gateway. The user may work outside in day time, therefore the necessary time that the communication of the IOT gate for the house should be attempted to be established only occupies a small part of all time. On the other hand, if a user would like to move from one region to another region, he often has some motions. That is, the determining operation for determining if any user enters a communicating range of an IOT gateway is only needed while the user has some specific motions. Via the cooperation for the processing circuit and the motion detecting circuit, unnecessary communication attempting can be greatly reduced, thus the power consumption can be decreased.

As above-mentioned descriptions, the smart identifying apparatus is expected to be light and handy. The advantage of the identifying apparatus is great if the battery power can keep the electronic apparatus active for months.

In another embodiment, the processing circuit controls the communication circuit not to communicate with the IOT gateway if the processing circuit estimates the user has no motion matching the predetermined motion rule according to the comparing result. That is, the communicating circuit need not waste power to attempt unnecessary communication if no motion is detected.

In some embodiments, the processing circuit activates the communication circuit 203 to attempt to communicate with the IOT gateway if the processing circuit estimates the user has at least one motion matching the predetermined motion rule according to the comparing result, to confirm if the communication circuit is in the effective wireless communication distance corresponding to the IOT gateway.

The predetermined motion rule can be adjusted according to different requirements. For example, the motion detecting circuit and the processing circuit can use statistical data of motions of a user to find out more detailed motions, and further define most possible motions of the user to precisely detect a corresponding motion and accordingly determines if a user enters a specific region. On the other hand, in order to reduce cost and design complexity, the motion detecting circuit can just determine if any motion happens, and the processing circuit informs the communicating circuit to attempt to communicate with the IOT gateway if any motion is detected, to determine if the user enters a specific region.

A single smart identifying apparatus can be used with different IOT gateways in different regions. For example, a first IOT gateway is provided in the house and a second IOT gateway is provided in the office. In some embodiments, a single IOT gateway can correspond to a plurality of smart identifying apparatuses. Comparing with a conventional method that uses infrared light or ultrasonic wave to detect is any user appears in a specific space, the smart identifying apparatus 20 can further set the user's identifying code, and the rule for the user can be set as well. Using the settings, various convenient services can be applied to a user. Moreover, such design can be continuously updated adapting to different environments, for example, via learning algorithms and mechanisms by various kinds machines, to find a best mode for smart services.

In another embodiment, the IOT gateway informs the IOT apparatus to activate a security operation if the IOT gateway notices the communicating circuit moves from a location in the effective wireless communication distance corresponding to the IOT gateway to a location out of the effective wireless communication distance corresponding to the IOT gateway. In other words, if the user carries the smart identifying apparatus and leaves the house or the offices, that is, the IOT gateway cannot continuously communicate with the smart identifying apparatus that the user carries, the IOT gateway can automatically activate a corresponding security operation, for example, activate the security equipment in the house. That is, if the user leaves the house but some dangers occur, such as forgetting to turn off the gas or a thief invades, the IOT gateway can perform corresponding operations according to a predetermined rule.

The abovementioned motion detecting circuit, the processing circuit and the communicating circuit can be implemented in the same case or housing. In another example, the motion detecting circuit, the smart identifying apparatus, the processing circuit and the communicating apparatus can be implemented into different apparatuses. For example, the motion detecting circuit is provided in a bracelet that can communicate with a processing circuit of the smart identifying apparatus via wireless communication and transmit detected user motion. After that, the processing circuit of the smart identifying apparatus performs above-mentioned corresponding processes according to a predetermined motion rule.

To save more power, the communicating circuit enters a power saving mode if the communicating circuit does not attempt to communicate with the IOT gateway. Various kinds of conventional power saving or sleeping design can be applied to implement the power saving mode. For example, the circuit can be designed to have different power supplies for different modules, and the processing circuit controls a corresponding power supplying module to awake or to inform the communicating circuit to enter a power saving mode. Based on current electronic techniques, only little power or even zero power are needed if the module enters a power saving mode. Therefore, the power for the smart identifying apparatus can be significantly reduced, such that limited battery power can sustain for a longer time.

For determining the motion mode more accurately, in one embodiment, the processing circuit has a proofing mode. The processing circuit controls the communicating circuit to continuously attempt to communicate with the IOT gateway in the proofing mode, no matter what user motion is detected. In other words, the processing circuit can record the motion of a user and whether the IOT gateway is successfully connected. Such comparing can be a basement for adjusting or setting the above-mentioned motion rule. For example, classifying the detected motions to different kinds, and counting a number that the communicating circuit successfully connects to the IOT gateway for different kinds of detected motions. By this way, some motion modes that need no attempting for connecting the IOT gateway can be excluded and the power can be further saved.

In another embodiment, the processing circuit can adjust the predetermined motion rules according to communicating results that the communicating circuit attempts to communicate with the IOT gateway when the predetermined motion rule is matched. In other words, the processing circuit can collects statistical data to find out a percentage that the communicating circuit fails to connect to the IOT gateway according to the currently used motion rule. Also, the motion rule can be adjusted according to the percentage that the communicating circuit successfully connect to the IOT gateway.

The IOT gateway can perform a corresponding operation after determining that the user enters a specific region. The smart identifying apparatus itself can activate the corresponding operations according to whether the smart identifying apparatus is continuously connected to the IOT gateway. For example, the smart identifying apparatus can comprise other circuits or apparatuses, which can perform different operations based on a command of the processing circuit if the user enters a predetermined region or leaves a predetermined region.

Besides, in order to handle abnormal situations, the identifying apparatus can have an electronic or mechanic switch, for a user to activate or to stop an operation that the communicating circuit is controlled to attempt to communicate with the IOT gateway according to an motion detected by the motion detecting circuit.

In one embodiment, the processing circuit can comprise a security mode. In such case, the smart identifying apparatus is provided in an object to be protected. If the processing circuit is in the security mode and the motion sensing circuit detects the motion, the communicating circuit informs the IOT gateway to activate a corresponding security operation. For example, the smart identifying apparatus can be hanged on the doorknob, and the motion detecting circuit of the smart identifying apparatus is triggered if someone turns the doorknob. In such case, the smart identifying apparatus generates alarm, or the IOT gateway is informed to perform corresponding operations. It is noted that the "security mode" mentioned here does not mean that the smart identifying apparatus 61 must appear in the above-mentioned transmitting range of the IOT gateway. Therefore, for example, such smart identifying apparatus can be a small buckle such that the user can hang it on the doorknob of the hotel while user has a business trip. Alternatively, the user can hang it to the luggage on the luggage rack. In other words, the same smart identifying apparatus not only can save power but also can provide different applications.

Additionally, for stability and reliability, in another embodiment, even if no motion is detected, the processing circuit can control the communicating circuit to periodically attempt to communicate with the IOT gateway after no motion is detected. For example, the processing circuit still informs the communicating circuit to attempt to connect to the IOT gateway every 2 minutes even if no motion is detected. Additionally, the processing circuit even can classify the motion mode, and sets the time period that the communicating circuit attempts to connect to the IOT gateway for different motion modes.

Additionally, in one embodiment, the smart identifying apparatus can comprise a time circuit. In other words, the smart identifying apparatus can know it is morning or evening. The processing circuit can apply different motion rules according to the current time that the time circuit provides. For example, different motion rules can be respectively used to midnight, daytime, or transportation time. By this way, the power can be reduced more efficiently, and the issues for wrong determining or non-determining can be avoided.

If time information is also considered, in another embodiment, the processing circuit can count a number that the communicating circuit successfully connects to the IOT gateway for different timings to adjust the motion rule. By this way, the motion rule can be more precisely adjusted and set according to user behaviors for different users.

Besides, in another embodiment, the smart identifying apparatus can further comprise an additional communicating circuit. The additional communicating circuit identifies a location for the smart identifying apparatus via an additional communicating protocol. The control circuit attempts to communicate with the IOT gateway via the additional communicating circuit. For example, the additional communicating circuit can use Bluetooth, Wi-Fi or NFC. Further, the smart identifying apparatus can comprise another communicating circuit besides the communicating circuit applying Z-wave. If an electronic equipment which can be connected is found in a specific region via the additional communicating circuit such as a Bluetooth apparatus, it is helpful for determining that the smart identifying apparatus already appears in a corresponding region. Via this method, the accuracy and reliability for connection of the IOT gateway can be further increased.

In another embodiment, the smart identifying apparatus can comprise a battery circuit. The processing circuit refers to the remaining battery power to set a rule that the communicating circuit attempt to communicate with the IOT gateway if the battery circuit determines the battery power is lower than a predetermined value. In other words, the processing circuit for the smart identifying apparatus can have different processing rules for different battery powers.

In view of above-mentioned different embodiments, a more convenient IOT gateway design can be provided to a user.

### Brief Description of Drawings

FIG.1 is a schematic diagram illustrating an application for a smart identifying apparatus according to one embodiment of the present invention.
FIG.2 is a block diagram illustrating a smart identifying apparatus according to one embodiment of the present invention.
FIG.3 is a flow chart illustrating the determining rules for the smart identifying apparatus according to one embodiment of the present invention.
FIG.4 is a block diagram illustrating a smart identifying apparatus according to another embodiment of the present invention.
FIG.5 is a schematic diagram illustrating the interactions between the smart identifying apparatus and an IOT (interest of things) gateway.
FIG.6 is a schematic diagram illustrating the application that the smart identifying apparatus is applied as a security apparatus.

### Detailed Description

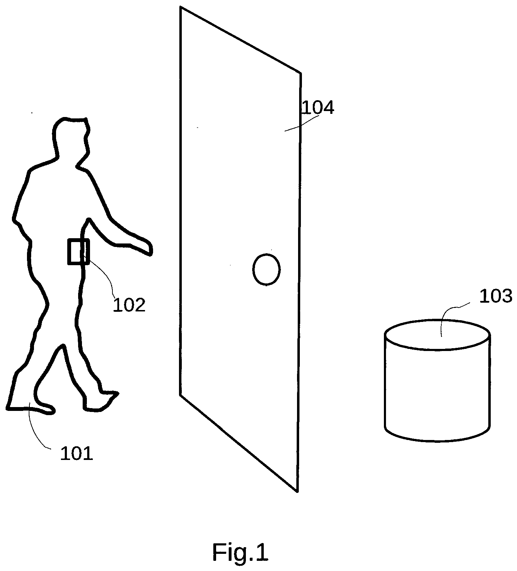

Please refer to FIG.1, which is a schematic diagram illustrating an application for a smart identifying apparatus according to one embodiment of the present invention. As shown in FIG.1, the user 101 carries the smart identifying apparatus 102. The user can enter the space after the door 104 and acts, and can leave as well. In this space, an IOT gateway 103 having an effective transmitting range is provided. The IOT gateway 103 has an effective transmission range. In other words, when the user is in a space outside the door 104, the smart identifying apparatus 102 may not communicate with the IOT gateway 103 for being out of the transmitting range. With such characteristics, deciding whether the user 101 is in the predetermined space can be based on whether the smart identifying apparatus 102 successfully communicates with the IOT gateway 103.

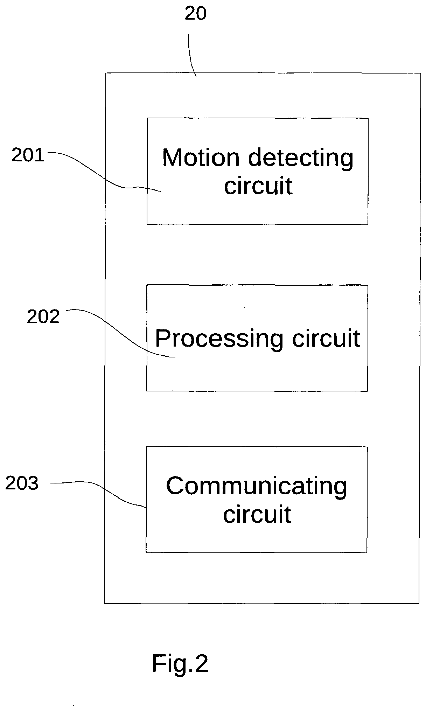

Please refer to FIG.2, which is a block diagram illustrating a smart identifying apparatus according to one embodiment of the present invention.

A user can carry the portable smart identifying apparatus 20 to different regions and. A snap flip can be provided along with this portable smart identifying apparatus, such that the portable smart identifying apparatus can be fastened to a key ring. In another embodiments, the portable smart identifying apparatus can be implemented in a mobile phone protecting shell, thereby a user can carry the portable smart identifying apparatus along with the mobile phone. Additionally, the portable smart identifying apparatus 20 can be embedded into different kinds of daily necessaries, for example, a gadget that is convenient for a user to carry on, such as a wallet.

Such portable smart identifying apparatus 20 can comprise a circuit board on which a corresponding control chip, a detecting circuit and a corresponding communicating device, such as an antenna, are provided. Also, the portable smart identifying apparatus can comprise a lithium battery, a button cell battery, a normal battery or share a power source with other apparatuses. For example, such portable smart identifying apparatus can electrically connect to a battery of the mobile phone and acquire the power from the mobile phone battery. The portable smart identifying apparatus 20 can be implemented in a vehicle such as a car, a motor cycle, a bicycle, or a skateboard. Such vehicles often leave or enter a particular region along with the user. In this sense, smart identifying apparatuses embedded in vehicles are within the definition of a portable smart identifying apparatus. Such portable smart identifying apparatus is convenient for a user to carry and operate in different regions.

In one embodiment, the smart identifying apparatus 20 comprises an motion detecting circuit 201, a communicating circuit 203 and a processing circuit 202. The motion detecting circuit 201 can be implemented by a triaxial accelerometer or a nine-axis accelerometer along with other circuits, or implemented by other detecting circuits. For example, the motion detecting circuit 201 can be implemented by a vibration senor or corresponding circuits. Additionally, based on different design requirements, such as cost or sensitivity, other existing products that can detect motions can be used to implement the motion detecting circuit 201.

Besides, the motion detecting circuit 201 can comprise a detecting device, or comprise a combination of a plurality of detecting devices. If the motion detecting circuit 201 comprises a combination of a plurality of detecting devices, many motion detecting results can be combined to determine an motion of a user who carries this motion detecting circuit, to acquire a more accurate determining result. Besides, detecting devices with lower cost or lower power consumption can be used when cost is a major concern.

Additionally, the communicating circuit 203 of the smart identifying apparatus has an effective wireless transmitting distance in connecting to the IOT gateway. The IOT gateway mentioned here means an IOT gateway for IOT application which can control other IOT apparatuses to perform a predetermined operation. It is noted that, with continuously improving techniques and lower cost, today's IOT apparatuses can provide not only specific applications, such as light, music playing, or temperature adjusting, but also above-mentioned IOT gateway functions. In other words, an LED provided in a ceiling can comprise a circuit board with a corresponding communicating circuit, such that the desired IOT gateway function can be achieved. In another example, a necessary communicating circuit can be implemented in a television to provide the desired IOT gateway function. Or, in still another example, an independent machine is set up to provide the desired IOT gateway function.

The IOT gateway can follow one of various communicating protocols, for example, Z-Wave, Zigbee, or other published standards, or other communicating standards defined by some specific manufacturers. Such IOT gateway can be a single electronic apparatus, such as an air conditioner, and does not control other electronic equipment's.

Specifically, the effective wireless transmitting distance for the communicating circuit 203 can indicate a current location of the user via setting the power and related parameters for the communicating circuit 203. The communicating circuit 203 communicates with an IOT gateway via a wireless communication protocol in the effective wireless communication distance, such that the IOT gateway can determine if the communication circuit is in the effective wireless communication distance corresponding to the IOT gateway.

The IOT apparatus is informed to perform a corresponding operation based on a predetermined rule if the IOT gateway determines that the communication circuit is in the effective wireless communication distance corresponding to the IOT gateway. For example, if the effective wireless communication distance is 5m, it is suitable for a room design. If the user carries the smart identifying apparatus 20, enters a room having an IOT gateway, and the smart identifying apparatus 20 successfully communicate with the IOT gateway, the IOT gateway can determine that the user appears in the 5m range and turns on a corresponding IOT equipment, such as air conditioners or lights. To the contrary, if the smart identifying apparatus 20 cannot successfully connect with the IOT gateway, the IOT gateway turns off the light, the air conditioner or related equipment according to a predetermined rule. Another scenario is that, when the smart identifying apparatus 20 successfully connects to the IOT gateway, the IOT gateway can turn on, turn off or adjust IOT apparatuses, to match the requirements for different users in the same region. For example, if the user A and B appear in the same room concurrently, and the IOT gateway connects to two corresponding smart identifying apparatus 20, the IOT gateway can adjust the air conditioner to provide the environment suitable for two people, or playing corresponding music.

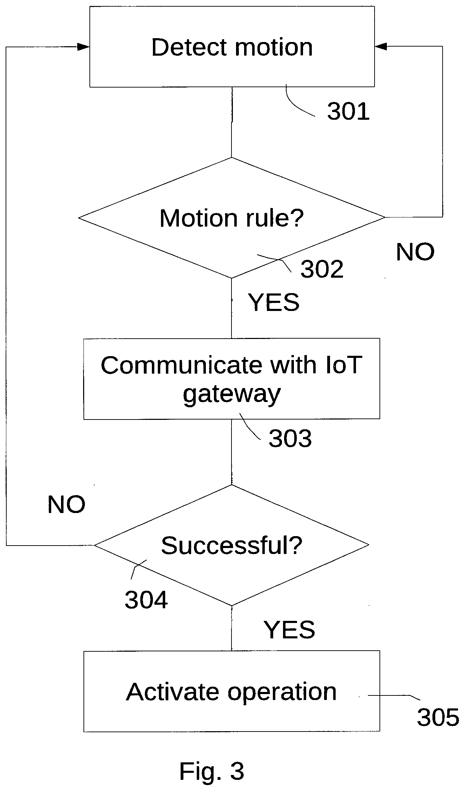

Please refer to FIG.3, which is a flow chart illustrating the determining rules for the smart identifying apparatus according to one embodiment of the present invention.

The processing circuit 202 of the smart identifying apparatus 20 compares the user motion detected by the motion detecting circuit (step 301) with a predetermined motion rule (step 302), and decides whether to let the communication circuit 203 actively generate a signal to attempt to communicate with the IOT gateway according to the comparing result (step 303). The IOT gateway activates corresponding operations (step 305) if successfully connected (step 304). In other words, the motion detecting circuit 201 detects if the user has an motion, or detects what the motion is. The motion results for the detected motions, either being processed or not, are transmitted to the processing circuit 202. The processing circuit 202 determines if the detected motion meets a predetermined motion mode according to a predetermined motion rule. If the detected motion meets a predetermined motion mode, the communicating circuit 203 attempts to communicate with the IOT gateway. If the communication is successfully established, the IOT gateway determines the user probably appears in this region and corresponding operation is performed, to control a corresponding electronic equipment to perform a predetermined motion.

Via this mechanism, the communicating circuit 203 does not need to continuously communicate with the IOT gateway. The user may work outside in day time, therefore the necessary time that the communication of the IOT gate for the house should be attempted to be established only occupies a small part of all time. On the other hand, if a user moves from one region to another region, he often has some specific motions. That is, the determining operation for determining if any user enters a communicating range of an IOT gateway is only needed while the user has some specific motions. Via the cooperation for the processing circuit 202 and the motion detecting circuit 201, unnecessary communication attempting can be greatly reduced, thus the power consumption can be decreased.

As above-mentioned descriptions, the smart identifying apparatus 20 is expected to be light and handy. The advantage of the identifying apparatus is great if the battery power can keep the electronic apparatus active for months.

In another embodiment, the processing circuit 202 controls the communication circuit 203 not to communicate with the IOT gateway if the processing circuit 202 estimates the user has no motion matching the predetermined motion rule according to the comparing result. That is, the communicating circuit 203 need not waste power to attempt unnecessary communication if no motion is detected.

In some embodiments, the processing circuit 202 activates the communication circuit 203 to attempt to communicate with the IOT gateway if the processing circuit 202 estimates the user has at least one motion matching the predetermined motion rule according to the comparing result, to confirm if the communication circuit 203 is in the effective wireless communication distance corresponding to the IOT gateway.

The predetermined motion rule can be adjusted according to different requirements. For example, the motion detecting circuit 201 and the processing circuit 202 can use statistical data of motions of a user to find out more detailed motions, and further define most possible motions of the user to precisely detect determine if a user enters a specific region. On the other hand, in order to reduce cost and design complexity, the motion detecting circuit can just determine if any motion happens, and the processing circuit 202 informs the communicating circuit 203 to attempt to communicate with the IOT gateway if any motion is detected, to determine if the user enters a specific region.

A single smart identifying apparatus 20 can be used with different IOT gateways in different regions. For example, a first IOT gateway is provided in the house and a second IOT gateway is provided in the office. In some embodiments, a single IOT gateway can correspond to a plurality of smart identifying apparatuses 20. Comparing with a conventional method that uses infrared light or ultrasonic wave to detect if any user appears in a specific space, the smart identifying apparatus 20 can be further set the user's identifying code, and the rule for the user can be set as well. Using the settings, various convenient services can be applied to a user. Moreover, such design can be continuously updated adapting to different environments, for example, via learning algorithms and mechanisms by various kinds machines, to find a best mode for smart services.

In another embodiment, the IOT gateway informs the IOT apparatus to activate a security operation if the IOT gateway notices the communicating circuit 203 moves from a location in the effective wireless communication distance corresponding to the IOT gateway to a location out of the effective wireless communication distance corresponding to the IOT gateway. In other words, if the user carries the smart identifying apparatus 20 and leaves the house or the offices, that is, the IOT gateway cannot continuously communicate with the smart identifying apparatus 20 that the user carries, the IOT gateway can automatically activate a corresponding security operation, for example, activate the security equipment in the house. That is, if the user leaves the house but some dangers occur, such as forgetting to turn off the gas or a thief invades, the IOT gateway can perform corresponding operations according to a predetermined rule.

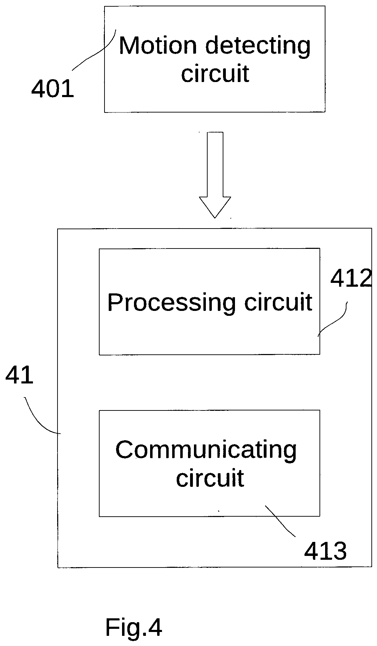

Please refer to FIG.4, which is a block diagram illustrating a smart identifying apparatus according to another embodiment of the present invention. The abovementioned motion detecting circuit, the processing circuit and the communicating circuit can be implemented in the same case or housing. In another example, the motion detecting circuit 401, the smart identifying apparatus 41, the processing circuit 412 and the communicating apparatus 413 can be implemented into different apparatuses, as illustrated in FIG.4. For example, the motion detecting circuit 401 is provided in a bracelet that can communicate with a processing circuit of the smart identifying apparatus via wireless communication and transmit detected user motion. After that, the processing circuit of the smart identifying apparatus performs above-mentioned corresponding processes according to a predetermined motion rule.

To save more power, the communicating circuit enters a power saving mode if the communicating circuit does not attempt to communicate with the IOT gateway. Various kinds of conventional power saving or sleeping design can be applied to implement the power saving mode. For example, the circuit can be designed to have different power supplies for different modules, and the processing circuit controls a corresponding power supplying module to awake or to inform the communicating circuit to enter a power saving mode. Based on current electronic techniques, only little power or even zero power are needed if the module enters a power saving mode. Therefore, the power for the smart identifying apparatus can be significantly reduced, such that limited battery power can sustain for a longer time.

For determining the motion mode more accurately, in one embodiment, the processing circuit has a proofing mode. The processing circuit controls the communicating circuit to continuously attempt to communicate with the IOT gateway in the proofing mode, no matter what user motion is detected. In other words, the processing circuit can record the motion of a user and whether the IOT gateway is successfully connected. Such comparing can be a base for adjusting or setting the above-mentioned motion rule. For example, classifying the detected motions to different kinds, and counting a number that the communicating circuit successfully connects to the IOT gateway for different kinds of detected motions. By this way, some motion modes that need no attempting for connecting the IOT gateway can be excluded and the power can be further saved.

In another embodiment, the processing circuit can adjust the predetermined motion rules according to communicating results that the communicating circuit attempts to communicate with the IOT gateway when the predetermined motion rule is matched. In other words, the processing circuit can collect statistical data to find out a percentage that the communicating circuit fails to connect to the IOT gateway according to the currently used motion rule. Also, the motion rule can be adjusted according to the percentage that the communicating circuit successfully connects to the IOT gateway.

The IOT gateway can perform a corresponding operation after determining that the user enters a specific region. The smart identifying apparatus itself can activate the corresponding operations according to whether the smart identifying apparatus is connected to the IOT gateway. For example, the smart identifying apparatus can comprise other circuits or apparatuses, which can perform different operations based on a command of the processing circuit if the user enters a predetermined region or leaves a predetermined region.

Besides, in order to handle abnormal situations, the identifying apparatus can have an electronic or mechanical switch, for a user to activate or to stop an operation that the communicating circuit is controlled to attempt to communicate with the IOT gateway according to an motion detected by the motion detecting circuit.

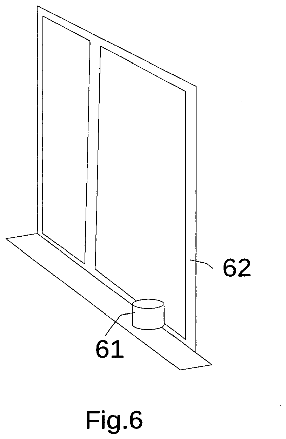

FIG.6 is a schematic diagram illustrating the application that the smart identifying apparatus is applied as a security apparatus. In this embodiment, the processing circuit can comprise a security mode. In such case, the smart identifying apparatus 61 is implemented in an object to be protected 62, for example, a window or a door. If the processing circuit is in the security mode and the motion sensing circuit detects the motion, the communicating circuit informs the IOT gateway to activate a corresponding security operation. For example, the smart identifying apparatus 61 can be hanged on the doorknob, and the motion detecting circuit of the smart identifying apparatus 61 is triggered if someone turns the doorknob. In such case, the smart identifying apparatus 61 generates alarm, or the IOT gateway is informed to perform corresponding operations. It is noted that the "security mode" mentioned here does not mean that the smart identifying apparatus 61 must appear in the above-mentioned transmitting range of the IOT gateway. Therefore, for example, such smart identifying apparatus 61 can be a small buckle such that the user can hang it on the doorknob of the hotel while user has a business trip. Alternatively, the user can hang it to the luggage on the luggage rack. In other words, the same smart identifying apparatus 61 not only can save power but also can provide different applications.

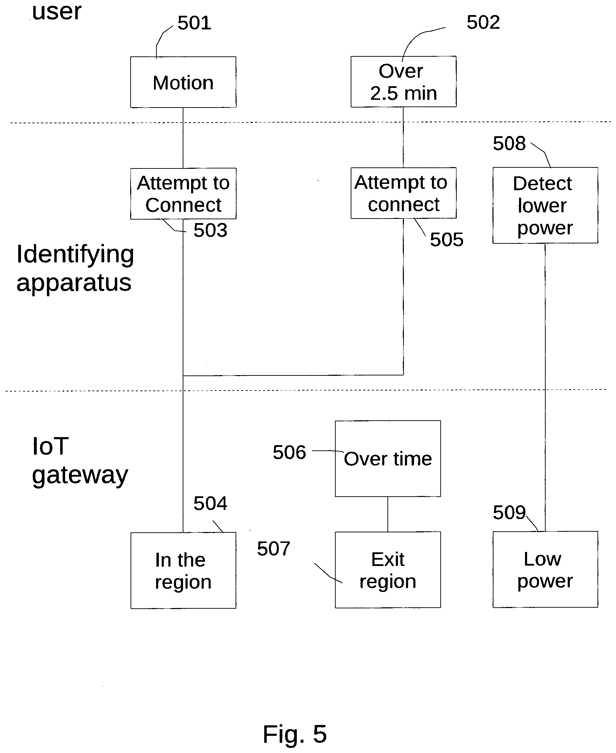

Please refer to FIG.5, which is a schematic diagram illustrating an IOT gateway, a smart identifying apparatus and operations for a user. The smart identifying apparatus attempts to connect with the IOT gateway (step 503) while the user moves (step 501). The IOT gate determines the user is in the predetermined region if successfully connected (step 504). Additionally, for stability and reliability, even if no motion is detected, the processing circuit can control the communicating circuit to periodically attempt to communicate with the IOT gateway for a predetermined time (ex 2.5 minutes), according to the motion rule. For example, the processing circuit still informs the communicating circuit to attempt to connect to the IOT gateway every 2.5 minutes even if no motion is detected. Additionally, the processing circuit even can classify motion modes, and set the time period that the communicating circuit attempts to connect to the IOT gateway for different motion modes. Further, the IOT gateway determines the user leaves this region (step 507) and activates related operation (ex. turn off the light) if the smart identifying apparatus is not connected for a predetermined time period (step 506). Furthermore, in order to avoid wrong determining while the smart identifying apparatus has no power, the smart identifying apparatus can inform the IOT gateway to perform an operation corresponding to a low power situation (step 509) if the smart identifying apparatus detects a low power (step 508).

In one embodiment, the smart identifying apparatus can comprise a time circuit. In other words, the smart identifying apparatus can know it is morning or evening. The processing circuit can use different motion rules according to the current time that the time circuit provides. For example, different motion rules can be respectively used to midnight, daytime, or transportation time. By this way, the power can be reduced more efficiently, and the issues for wrong determining or non-determining can be avoided.

If time information is also considered, in another embodiment, the processing circuit can count a number that the communicating circuit successfully connects to the IOT gateway for different timings to adjust the motion rule. By this way, the motion rule can be more precisely adjusted and set according to user behaviors for different users.

Besides, in another embodiment, the smart identifying apparatus can further comprise an additional communicating circuit. The additional communicating circuit identifies a location for the smart identifying apparatus via an additional communicating protocol. The control circuit attempts to communicate with the IOT gateway via the additional communicating circuit. For example, the additional communicating circuit can use Bluetooth, Wi-Fi or NFC. Further, the smart identifying apparatus can comprise another communicating circuit besides the communicating circuit applying Z-wave. If an electronic equipment which can be connected is found in a specific region via the additional communicating circuit such as a Bluetooth apparatus, it is helpful for determining that the smart identifying apparatus already appears in a corresponding region. Via this method, the accuracy and reliability for connection of the IOT gateway can be further increased.

In another embodiment, the smart identifying apparatus can comprise a battery circuit. The processing circuit refers to the remaining battery power to set a rule that the communicating circuit attempt to communicate with the IOT gateway if the battery circuit determines the battery power is lower than a predetermined value. In other words, the processing circuit for the smart identifying apparatus can have different processing rules for different battery powers.

The present invention may be summarized as follows: A smart identifying apparatus, which is portable and a user can carry the smart identifying apparatus to different regions. The smart identifying apparatus includes a motion detecting circuit, a communicating circuit and a processing circuit. The motion detecting circuit detects motions for a user. The communicating circuit has an effective wireless communication distance, configured to communicate with an IOT gateway via a wireless communication protocol. The processing circuit compares the user motion detected by the motion detecting circuit with a predetermined motion rule, and decides if the communication circuit is controlled to actively generate a notice to communicate with the IOT gateway according to the comparing result.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A smart identifying apparatus portable for a user to carry among different regions, comprising:
a motion detecting circuit (201), configured to detect motions of the user;
a communicating or communication circuit (203), having an effective wireless communication distance, configured to communicate with an Internet of Things, IOT, gateway via a wireless communication protocol in the effective wireless communication distance, such that the IOT gateway is capable of determining if the communication circuit (203) is within the effective wireless communication distance corresponding to the IOT gateway, wherein an IOT apparatus is informed to perform a corresponding operation based on a predetermined rule if the IOT gateway determines that the communication circuit (203) is in the effective wireless communication distance corresponding to the IOT gateway;
a processing circuit (202), configured to compare a user motion detected by the motion detecting circuit (201) with a predetermined motion rule, and configured to decide if the communication circuit (203) is controlled to actively generate a signal to attempt to communicate with the IOT gateway according to the comparing result; and
the communicating circuit (203) is configured to enter a power saving mode if the communicating circuit (203) does not attempt to communicate with the IOT gateway,
**characterized in that**:
the smart identifying apparatus further comprises a battery circuit, wherein the processing circuit (202) is configured such that, if the battery circuit detects that a power is lower than a predetermined value, the processing circuit (202) can set a rule for the communicating circuit (203) to attempt to communicate with the IOT gateway according to the power.

2. The smart identifying apparatus of claim 1, wherein the processing circuit controls the communication circuit not to communicate with the IOT gateway if the processing circuit determines that the user has no motion matching the predetermined motion rule according to the comparing result.

3. The smart identifying apparatus of claim 1 and/or 2, wherein the processing circuit activates the communication circuit to attempt to communicate with the IOT gateway if the processing circuit determines that the user has at least one motion matching the predetermined motion rule according to the comparing result, to confirm if the communication circuit is in the effective wireless communication distance corresponding to the IOT gateway.

4. The smart identifying apparatus of any one or more of claims 1 to 3, wherein the IOT gateway informs the IOT apparatus to activate a security operation if the IOT gateway determines the communicating circuit moves from a location in the effective wireless communication distance corresponding to the IOT gateway to a location out of the effective wireless communication distance corresponding to the IOT gateway.

5. The smart identifying apparatus of any one or more of claims 1 to 4, wherein the motion detecting circuit, the processing circuit and the communicating circuit are in a single case.

6. The smart identifying apparatus of any one or more of claims 1 to 5, wherein the motion detecting circuit transmits at least one detected user motion to the processing circuit via a wireless communication, to control the communication circuit according to the predetermined motion rule.

7. The smart identifying apparatus of any one or more of claims 1 to 6, wherein the processing circuit controls the communicating circuit to continuously attempt to communicate with the IOT gateway in a proofing mode, no matter what user motion is detected; and
wherein the processing circuit further compares the user motion detected by the motion detecting circuit with a result that the communicating circuit attempts to communicate the IOT gateway, to set the predetermined motion rule.

8. The smart identifying apparatus of any one or more of claims 1 to 7, wherein the processing circuit adjusts the predetermined motion rule according to a communicating result that the communicating circuit attempts to communicate with the IOT gateway if the predetermined motion rule is matched.

9. The smart identifying apparatus of any one or more of claims 1 to 8, wherein the motion detecting circuit is an accelerometer.

10. The smart identifying apparatus of any one or more of claims 1 to 8, wherein the motion detecting circuit is a vibration sensor, which generates a corresponding signal to the processing circuit if a vibration is detected.

11. The smart identifying apparatus of any one or more of claims 1 to 10, wherein the processing circuit activates a predetermined operation corresponding to a location for an outside server, if the communicating circuit successively communicates with the IOT gateway.

12. The smart identifying apparatus of any one or more of claims 1 to 11, wherein the wireless communication protocol is a Z-wave protocol.

13. The smart identifying apparatus of any one or more of claims 1 to 12, further comprising a switching apparatus, configured to activate or to stop an operation that the communicating circuit is controlled to attempt to communicate with the IOT gateway according to a motion detected by the motion detecting circuit.

14. The smart identifying apparatus of any one or more of claims 1 to 13, wherein the processing circuit further has a security mode, in which the smart identifying apparatus is provided in an object to be protected, wherein the communicating circuit informs the IOT gateway to activate a corresponding security operation if the processing circuit is in the security mode and the motion detecting detects a motion.

15. The smart identifying apparatus of any one or more of claims 1 to 14, wherein the processing circuit controls the communicating circuit to periodically attempt to communicate with the IOT gateway after a predetermined time according to the predetermined motion rule, if no motion is detected.

16. The smart identifying apparatus of any one or more of claims 1 to 15, further comprises a time circuit, wherein the processing circuit applies different motion rules according to a current time provided by the time circuit.

17. The smart identifying apparatus of any one or more of claims 1 to 16, wherein the processing circuit collects statistical data and gets a percentage that the communicating circuit successfully connect to the IOT gateway at different timings, to adjust the predetermined motion rule.

18. The smart identifying apparatus of any one or more of claims 1 to 17, further comprising an additional communicating circuit configured to determine a location for the smart identifying apparatus via an additional communicating protocol, wherein the control circuit attempts to communicate with the IOT gateway according to the additional communicating circuit.

## Patentansprüche

1. Intelligente Identifizierungsvorrichtung, die für einen Benutzer tragbar ist, um sie zwischen verschiedenen Regionen zu tragen, umfassend:
eine Bewegungserfassungsschaltung (201), die konfiguriert ist, um Bewegungen eines Benutzers zu erfassen;
eine Kommunikationsschaltung (203) mit einer effektiven drahtlosen Kommunikationsentfernung, die konfiguriert ist, um mit einem IOT-Gateway über ein drahtloses Kommunikationsprotokoll in der effektiven drahtlosen Kommunikationsentfernung zu kommunizieren, so dass das IOT-Gateway bestimmen kann, ob sich die Kommunikationsschaltung (203) innerhalb der effektiven drahtlosen Kommunikationsentfernung entsprechend dem IOT-Gateway befindet, wobei eine IOT-Vorrichtung informiert wird, eine entsprechende Operation basierend auf einer vorbestimmten Regel auszuführen, wenn das IOT-Gateway bestimmt, dass sich die Kommunikationsschaltung (203) in der effektiven drahtlosen Kommunikationsentfernung befindet, die dem IOT-Gateway entspricht;
eine Verarbeitungsschaltung (202), die konfiguriert ist, um die von der Bewegungserfassungsschaltung (201) erfasste Benutzerbewegung mit einer vorbestimmten Bewegungsregel zu vergleichen, und konfiguriert ist, um zu entscheiden, ob die Kommunikationsschaltung (203) gesteuert wird, um aktiv ein Signal zu erzeugen, um zu versuchen, mit dem IOT-Gateway gemäß dem Vergleichsergebnis zu kommunizieren; und
die Kommunikationsschaltung (203) konfiguriert ist, in einen Energiesparmodus zu wechseln, wenn die Kommunikationsschaltung (203) nicht versucht, mit dem IOT-Gateway zu kommunizieren,
**dadurch gekennzeichnet, dass**:
die Intelligente Identifizierungsvorrichtung ferner eine Batterieschaltung umfasst, wobei Verarbeitungsschaltung (202) konfiguriert ist, so dass, wenn die Batterieschaltung erkennt, dass eine Leistung niedriger als ein vorbestimmter Wert ist, die Verarbeitungsschaltung (202) eine Regel festlegt, zu versuchen, mit dem IOT-Gateway entsprechend der Leistung zu kommunizieren.

2. Intelligente Identifizierungsvorrichtung nach Anspruch 1, wobei die Verarbeitungsschaltung die Kommunikationsschaltung so steuert, dass sie nicht mit dem IOT-Gateway kommuniziert, wenn die Verarbeitungsschaltung bestimmt, dass der Benutzer keine Bewegung hat, die mit der vorbestimmten Bewegungsregel gemäß dem Vergleichsergebnis übereinstimmt.

3. Intelligente Identifizierungsvorrichtung nach Anspruch 1 und/oder 2, wobei die Verarbeitungsschaltung die Kommunikationsschaltung aktiviert, um zu versuchen, mit dem IOT-Gateway zu kommunizieren, wenn die Verarbeitungsschaltung bestimmt, dass der Benutzer mindestens eine Bewegung hat, die mit der vorbestimmten Bewegungsregel gemäß dem Vergleichsergebnis übereinstimmt, um zu bestätigen, ob sich die Kommunikationsschaltung in der effektiven drahtlosen Kommunikationsentfernung befindet, die dem IOT-Gateway entspricht.

4. Intelligente Identifizierungsvorrichtung nach einem oder mehreren der Ansprüche 1 bis 3, wobei das IOT-Gateway die IOT-Vorrichtung anweist, eine Sicherheitsoperation zu aktivieren, wenn das IOT-Gateway bestimmt, dass sich die Kommunikationsschaltung von einem Ort in der effektiven drahtlosen Kommunikationsentfernung, die dem IOT-Gateway entspricht, zu einem Ort außerhalb der effektiven drahtlosen Kommunikationsentfernung bewegt, die dem IOT-Gateway entspricht.

5. Intelligente Identifizierungsvorrichtung nach einem oder mehreren der Ansprüche 1 bis 4, wobei sich die Bewegungserfassungsschaltung, die Verarbeitungsschaltung und die Kommunikationsschaltung in einem einzigen Fall befinden.

6. Intelligente Identifizierungsvorrichtung nach einem oder mehreren der Ansprüche 1 bis 5, wobei der Bewegungsmelder mindestens eine erfasste Benutzerbewegung über eine drahtlose Kommunikation an die Verarbeitungsschaltung überträgt, um die Kommunikationsschaltung gemäß der vorbestimmten Bewegungsregel zu steuern.

7. Intelligente Identifizierungsvorrichtung nach einem oder mehreren der Ansprüche 1 bis 6, wobei die Verarbeitungsschaltung die Kommunikationsschaltung steuert, um kontinuierlich zu versuchen, mit dem IOT-Gateway in einem Prüfmodus zu kommunizieren, unabhängig davon, welche Benutzerbewegung erfasst wird; und wobei die Verarbeitungsschaltung die von der Bewegungserfassungsschaltung erfasste Benutzerbewegung weiter mit einem Ergebnis vergleicht, dass die Kommunikationsschaltung versucht, das IOT-Gateway zu kommunizieren, um die vorbestimmte Bewegungsregel festzulegen.

8. Intelligente Identifizierungsvorrichtung nach einem oder mehreren der Ansprüche 1 bis 7, wobei die Verarbeitungsschaltung die vorbestimmte Bewegungsregel gemäß einem Kommunikationsergebnis anpasst, dass die Kommunikationsschaltung versucht, mit dem IOT-Gateway zu kommunizieren, wenn die vorbestimmte Bewegungsregel übereinstimmt.

9. Intelligente Identifizierungsvorrichtung nach einem oder mehreren der Ansprüche 1 bis 8, wobei die Bewegungserfassungsschaltung ein Beschleunigungsmesser ist.

10. Intelligente Identifizierungsvorrichtung nach einem oder mehreren der Ansprüche 1 bis 8, wobei die Bewegungserfassungsschaltung ein Vibrationssensor ist, der ein entsprechendes Signal an die Verarbeitungsschaltung erzeugt, wenn eine Vibration erfasst wird.

11. Intelligente Identifizierungsvorrichtung nach einem oder mehreren der Ansprüche 1 bis 10, wobei die Verarbeitungsschaltung eine vorbestimmte Operation aktiviert, die einem Ort für einen externen Server entspricht, wenn die Kommunikationsschaltung nacheinander mit dem IOT-Gateway kommuniziert.

12. Intelligente Identifizierungsvorrichtung nach einem oder mehreren der Ansprüche 1 bis 11, wobei das drahtlose Kommunikationsprotokoll ein Z-Wellen-Protokoll ist.

13. Intelligente Identifizierungsvorrichtung nach einem oder mehreren der Ansprüche 1 bis 12, ferner umfassend eine Schaltvorrichtung, die konfiguriert ist, um eine Operation zu aktivieren oder zu stoppen, dass die Kommunikationsschaltung gesteuert wird, um zu versuchen, mit dem IOT-Gateway entsprechend einer von der Bewegungserkennungsschaltung erfassten Bewegung zu kommunizieren.

14. Intelligente Identifizierungsvorrichtung nach einem oder mehreren der Ansprüche 1 bis 13, wobei die Verarbeitungsschaltung ferner einen Sicherheitsmodus aufweist, in dem die intelligente Identifizierungsvorrichtung in einem zu schützenden Objekt vorgesehen ist, wobei die Kommunikationsschaltung das IOT-Gateway zur Aktivierung einer entsprechenden Sicherheitsoperation informiert, wenn sich die Verarbeitungsschaltung im Sicherheitsmodus befindet und die Bewegungserkennung eine Bewegung erkennt.

15. Intelligente Identifizierungsvorrichtung nach einem oder mehreren der Ansprüche 1 bis 14, wobei die Verarbeitungsschaltung die Kommunikationsschaltung steuert, um periodisch zu versuchen, nach einer vorbestimmten Zeit gemäß der vorbestimmten Bewegungsregel mit dem IOT-Gateway zu kommunizieren, wenn keine Bewegung erfasst wird.

16. Die intelligente Identifizierungsvorrichtung nach einem oder mehreren der Ansprüche 1 bis 15 umfasst ferner eine Zeitschaltung, wobei die Verarbeitungsschaltung unterschiedliche Bewegungsregeln gemäß einer von der Zeitschaltung bereitgestellten aktuellen Zeit anwendet.

17. Intelligente Identifizierungsvorrichtung nach einem oder mehreren der Ansprüche 1 bis 16, wobei die Verarbeitungsschaltung statistische Daten sammelt und einen Prozentsatz erhält, den die Kommunikationsschaltung zu unterschiedlichen Zeitpunkten erfolgreich mit dem IOT-Gateway verbindet, um die vorbestimmte Bewegungsregel anzupassen.

18. Intelligente Identifizierungsvorrichtung nach einem oder mehreren der Ansprüche 1 bis 17, ferner umfassend eine zusätzliche Kommunikationsschaltung, die konfiguriert ist, um einen Ort für die intelligente Identifizierungsvorrichtung über ein zusätzliches Kommunikationsprotokoll zu bestimmen, wobei die Steuerschaltung versucht, mit dem IOT-Gateway gemäß der zusätzlichen Kommunikationsschaltung zu kommunizieren.

## Revendications

1. Appareil d'identification intelligent portatif destiné à un utilisateur pour porter entre différentes régions, comprenant :
un circuit de détection de mouvement (201), configuré pour détecter les mouvements de l'utilisateur
un circuit de communication ou de communication (203), présentant une distance de communication sans fil efficace, configuré pour communiquer avec une passerelle de l'Internet des objets, IdO, par l'intermédiaire d'un protocole de communication sans fil à la distance de communication sans fil efficace, de sorte que la passerelle de l'IdO peut déterminer si le circuit de communication (203) est à l'intérieur de la distance de communication sans fil efficace correspondant à la passerelle de l'IdO, dans lequel un appareil de l'IdO est informé pour mettre en œuvre un fonctionnement correspondant en fonction d'une règle prédéfinie si la passerelle de l'IdO détermine que le circuit de communication (203) est à la distance de communication sans fil efficace correspondant à la passerelle de l'IdO ;
un circuit de traitement (202), configuré pour comparer un mouvement d'utilisateur détecté par le circuit de détection de mouvement (201) avec une règle de mouvement prédéfinie et configuré pour décider si le circuit de communication (203) est commandé pour générer activement un signal afin de tenter de communiquer avec la passerelle de l'IdO selon le résultat de comparaison ; et
le circuit de communication (203) est configuré pour entrer dans un mode d'économie d'énergie si le circuit de communication (203) ne tente pas de communiquer avec la passerelle de l'IdO **caractérisé en ce que** :
l'appareil d'identification intelligent comprend en outre un circuit de batterie, dans lequel le circuit de traitement (202) est configuré de sorte que, si la batterie détecte que le circuit de batterie est inférieur à une valeur prédéfinie, le circuit de traitement (202) peut définir une règle pour le circuit de communication (203) afin de tenter de communiquer avec la passerelle de l'IdO selon l'énergie.

2. Appareil d'identification intelligent selon la revendication 1, dans lequel le circuit de traitement commande le circuit de communication de ne pas communiquer avec la passerelle de l'IdO si le circuit de traitement détermine que l'utilisateur ne présente pas de mouvement correspondant à la règle de mouvement prédéfinie selon le résultat de comparaison.

3. Appareil d'identification intelligent selon la revendication 1 et/ou 2, dans lequel le circuit de traitement active le circuit de communication afin de tenter de communiquer avec la passerelle de l'IdO si le circuit de traitement détermine que l'utilisateur présente au moins un mouvement correspondant à la règle de mouvement prédéfinie selon le résultat de comparaison, pour confirmer si le circuit de communication est à la distance de communication sans fil efficace correspondant à la passerelle de l'IdO.

4. Appareil d'identification intelligent selon l'un ou plusieurs des revendications 1 à 3, dans lequel la passerelle de l'IdO informe l'appareil de l'IdO pour activer un fonctionnement de sécurité si la passerelle de l'IdO détermine que le circuit de communication se déplace à partir d'un emplacement à la distance de communication sans fil efficace correspondant à la passerelle de l'IdO à un emplacement hors de la distance de communication sans fil efficace correspondante à la passerelle de l'IdO.

5. Appareil d'identification intelligent selon l'une ou plusieurs des revendications 1 à 4, dans lequel le circuit de détection de mouvement, le circuit de traitement et le circuit de communication sont dans un seul cas.

6. Appareil d'identification intelligent selon l'une ou plusieurs des revendications 1 à 5, dans lequel le circuit de détection de mouvement transmet au moins un mouvement d'utilisateur détecté au circuit de traitement par l'intermédiaire d'une communication sans fil, pour commander le circuit de communication selon la règle de mouvement prédéfinie.

7. Appareil d'identification intelligent selon l'une ou plusieurs des revendications 1 à 6, dans lequel le circuit de traitement commande le circuit de communication afin de tenter continuellement de communiquer avec la passerelle de l'IdO dans un mode de vérification, peu importe qu'un mouvement d'utilisateur soit détecté ; et
dans lequel le circuit de traitement compare en outre le mouvement d'utilisateur détecté par le circuit de détection de mouvement avec un résultat que le circuit de communication tente de communiquer avec la passerelle de l'IdO, pour définir la règle de mouvement prédéfinie.

8. Appareil d'identification intelligent selon l'une ou plusieurs des revendications 1 à 7, dans lequel le circuit de traitement ajuste la règle de mouvement prédéfinie selon un résultat de communication que le circuit de communication tente de communiquer avec la passerelle de l'IdO si la règle de mouvement prédéfinie correspond.

9. Appareil d'identification intelligent selon l'une ou plusieurs des revendications 1 à 8, dans lequel le circuit de détection de mouvement est un accéléromètre.

10. Appareil d'identification intelligent selon l'une ou plusieurs des revendications 1 à 8, dans lequel le circuit de détection de mouvement est un capteur de vibration, qui génère un signal correspondant au circuit de traitement si une vibration est détectée.

11. Appareil d'identification intelligent selon l'une ou plusieurs des revendications 1 à 10, dans lequel le circuit de traitement active un fonctionnement prédéfini correspondant à l'emplacement d'un serveur extérieur, si le circuit de communication communique consécutivement avec la passerelle de l'IdO.

12. Appareil d'identification intelligent selon l'une ou plusieurs des revendications 1 à 11, dans lequel le protocole de communication sans fil est un protocole d'onde Z (Z-Wave).

13. Appareil d'identification intelligent selon l'une ou plusieurs des revendications 1 à 12, comprenant en outre un appareil de commutation, configuré pour activer ou interrompre un fonctionnement pour lequel le circuit de communication est commandé afin de tenter de communiquer avec la passerelle de l'IdO selon un mouvement détecté par le circuit de détection de mouvement.

14. Appareil d'identification intelligent selon l'une ou plusieurs des revendications 1 à 13, dans lequel le circuit de traitement présente en outre un mode de sécurité, dans lequel l'appareil d'identification intelligent est situé dans un objet devant être protégé, dans lequel le circuit de communication informe la passerelle de l'IdO pour activer un fonctionnement de sécurité correspondant si le circuit de traitement est dans le mode de sécurité et la détection de mouvement détecte un mouvement.

15. Appareil d'identification intelligent selon l'une ou plusieurs des revendications 1 à 14, dans lequel le circuit de traitement commande le circuit de communication afin de tenter de communiquer périodiquement avec la passerelle de l'IdO après un temps prédéfini selon la règle de mouvement prédéfinie, si aucun mouvement n'est détecté.

16. Appareil d'identification intelligent selon l'une ou plusieurs des revendications 1 à 15, qui comprend en outre un circuit de temporisation, dans lequel le circuit de traitement applique différentes règles de mouvement selon un temps actuel fourni par le circuit de temporisation.

17. Appareil d'identification intelligent selon l'une ou plusieurs des revendications 1 à 16, dans lequel le circuit de traitement collecte des données statistiques et obtient un pourcentage que le circuit de communication se connecte avec succès à la passerelle de l'IdO à des temps différents, pour ajuster la règle de mouvement prédéfinie.

18. Appareil d'identification intelligent selon l'une ou plusieurs des revendications 1 à 17, comprenant en outre un circuit de communication supplémentaire configuré pour déterminer un emplacement pour l'appareil d'identification intelligent par l'intermédiaire d'un protocole de communication supplémentaire, dans lequel le circuit de commande tente de communiquer avec la passerelle de l'IdO selon le circuit de communication supplémentaire.
